# EUROPEAN PATENT SPECIFICATION

(11) **EP 2 862 117 B1**
(45) Date of publication and mention of the grant of the patent: **06.05.2020**
(21) Application number: 13728793.4
(22) Date of filing: 03.06.2013
(51) Int. Cl.: G06F 21/36, H04L 9/32

(54) **METHOD AND SYSTEM FOR AUTHENTICATING MESSAGES**
VERFAHREN UND SYSTEM ZUR AUTHENTIFIZIERUNG VON BENACHRICHTIGUNGEN
PROCÉDÉ ET SYSTÈME D'AUTHENTIFICATION DE MESSAGES

(30) Priority: 19.06.2012 GB 201210823
(43) Date of publication of application: 22.04.2015
(73) Proprietor: Swivel Secure Limited, Wetherby LS22 7RD (GB)
(72) Inventor: RUSSELL, Christopher, Wetherby West Yorkshire LS22 7RD (GB)
(74) Representative: HGF Limited
(86) International application number: PCT/GB2013/051477
(87) International publication number: WO 2013/190266

(56) References cited:
- GB-A- 2 387 702
- US-A1- 2002 029 342
- US-A1- 2005 246 764

## Description

The present invention relates to a method and system for authenticating messages sent to a subscriber or user using the Short Messaging Service (SMS) or other protocols used in mobile telecommunications and related fields.

### BACKGROUND

Various systems are known for conducting electronic transactions in a more or less secure manner over a telecommunications link or the like. One well known system is known as electronic funds transfer at point-of-sale (EFTPOS), in which a user is issued with a credit or debit card bearing a unique identification number, usually embossed on the card in human-readable form and also encoded on a machine-readable magnetic strip on the reverse of the card. For further identification purposes, the card typically includes space for a user permanently to include his or her signature. In use, when a user wishes to make a purchase in, for example, a retail store, he or she presents the debit or credit card to a store employee. The card is then swiped through a card reader, and information relating to the identity of the card, the identity of the retail store and the value of the goods or services being purchased is transmitted by way of a telephone connection to a remote computer server operated by the card issuer (normally a bank or suchlike). The remote computer server checks that the user's card account contains sufficient funds or credit to cover the proposed transaction, checks that the user's card account is currently operational (for example, to check that the card has not been reported stolen), and then issues a confirmation signal back to the card reader to indicate that the transaction may be authorised. The store employee must then obtain a specimen of the user's signature and compare this with the signature on the reverse of the card so as to check the identity of the user. If the signatures appear to match, the store employee operates the card reader to complete the transaction, and the funds required to cover the transaction are then electronically transferred from the user's card account to the retail store. If the signatures do not appear to match, then the store employee may request additional proof of identification before authorising the transaction, or may simply refuse the transaction and retain the user's card, which may have been stolen, thereby preventing any unauthorised transfer of funds. This system is open to fraudulent abuse, since it is possible for a card to be stolen and for a thief to forge the signature of an authorised user.

In a development of this system, a card user may be issued with a personal identification number (PIN), which is usually a four digit code, and which is theoretically known only to the user and to the card issuer. Instead of or in addition to providing a specimen of his or her signature at the point-of-sale, the card user is required to enter his or her PIN into the card reader, and this information is transmitted to the remote computer server together with the card and retail store identification data and data regarding the value of the transaction. By providing an extra identification check by way of the PIN, this system helps to prevent fraud by forgery of signatures, but is still not completely secure because the PIN does not change between transactions, and may therefore be intercepted together with card identification data when being transmitted between the card reader and the remote server. Furthermore, it is possible for a thief to observe a user entering his or her PIN into a card reader and to remember the PIN. If the thief is also able to obtain card identification details, for example from a discarded till receipt or through conspiracy with the store employee, it is a simple matter to produce a fake card including all the appropriate identification information for later fraudulent use, or even to rob the authorised card user of his or her card.

A number of attempts to solve the problem of identity verification are currently available and include Public Key Infrastructure (PKI), SMART Cards, and biometrics.

A Public Key Infrastructure is a combination of hardware and software products, policies and procedures. PKI provides the basic security required to carry out electronic business so that users, who do not know each other, or are widely distributed, can communicate securely through a chain of trust. PKI is based on digital IDs known as 'digital certificates' which act like 'electronic passports' and bind the user's digital signature to his or her public key. The PKI approach is only applicable for Internet or other transactions that use a computer because the complexity of the software at the users' end of the transaction requires significant computing resources. The PKI approach is not well suited to high volume transaction processing because of this complexity.

Smart Cards are a response to the problem of credit/debit card fraud. Smart Cards are cards that have a microchip embedded within the card which enables personal details about the cardholder to be stored securely on the card, which can then be used to verify the identity of the person using the card. The Smart Card system relies upon there being a Smart Card reading apparatus at the point of sale. Currently, few high street merchants have invested in such equipment, and recent industry estimates expect a hybrid smart card/magnetic strip environment for the next 10-15 years. In addition, smaller or independent retailers find the cost of such equipment is a deterrent to uptake. Few Smart Card systems address the problem of "card not present" fraud such as e-commerce, m-commerce, interactive TV and telephone order unless the consumers invest in Smart Card readers for the home. Similarly, any Smart Card can be copied ("skimmed/cloned") and can subsequently be used fraudulently in card not present situations. Most major card issuers have plans to roll out such Smart Cards within the next few years, although the costs of the equipment, the cards themselves and the availability of the chips may delay this process.

A number of companies are currently developing biometric solutions to the problem of cardholder verification. The Biometric systems can use fingerprints, voice recognition, retinal scans or tissue samples to positively identify the cardholder. Similar to smart cards these biometric systems would require complex and costly equipment at the point of sale and would not provide any protection against fraud in card not present situations.

It is known from US 7,392,388 in the name of the present Applicant (the entire content of which is hereby incorporated into the present application by way of reference) to provide an identity verification system in which a user can identify himself to a bank or merchant computer or the like by applying a relatively simple protocol to a challenge string received from the bank or merchant computer by way of an SMS message, or a secure website by way of a Hypertext Transfer Protocol Secure (HTTPS) connection, or an email communication or the like. The user is in possession of a short numerical code, analogous to a typical Personal Identification Number (PIN) commonly used as a security measure together with a credit or debit card. This numerical code, which may be four digits in length (although other lengths may be used), is known only to the user and to the bank or card issuer. The user applies the numerical code to a pseudorandom security string issued by the bank or card issuer, by selecting characters from the security string, on a positional basis determined by each digit of the numerical code, taken in order. For example, where a user numerical code is "2473", and the pseudorandom security string is "396&fty7d3GG9", the user would return "9&y6", with "9" being the second (2^{nd}) character in the security string, "&" being the fourth (4^{th}) character, "y" being the seventh (7^{th}) character and "6" being the third (3^{rd}) character.

As an alternative to selecting characters from a security string on a positional basis by way of a numerical code, the user may do so on the basis of applying a secret shape or pattern to an array of security digits (rather like a Cardan grille), although computationally the method is similar to that described above.

A special advantage of the type of encryption disclosed in US 7,392,388 is that it is relatively simple for a user to apply mentally, although an applet or small application running on a mobile device owned by the user could also be used, while still being reasonably secure. In particular, assuming sufficient redundancy in the pseudorandom security string, it is not easy for a third party to deduce the user's PIN or numerical code, even if both a pseudorandom security string and a returned response from the user are hijacked.

US 2005/246764 discloses an authorization method including establishing a password for a user, wherein the password includes password characters in a defined order. The method further includes assigning a code character to each of the password characters at an authorization site, transmitting the code characters assigned to the password characters to a remote client and authorizing a user at the remote client upon entry of the code characters corresponding to the password characters in the defined order.

A growing problem is that of "phishing" or, where a fraudulent third party seeks to obtain security information from an individual by sending out communications purporting to be from that individual's bank or credit card issuer. Some of these phishing or communications are quite sophisticated, and can look almost identical to authentic communications. Moreover, it is relatively trivial for a fraudulent third party, when sending an email, to spoof an authentic email address of an individual's bank or credit card provider. By placing a fraudulent hypertext link in the email, the fraudster tries to lure the individual to a spoofed website where login and other security details are requested, the individual believing that he is responding to an authentic communication from his bank or card provider.

While there are various techniques available to reduce this risk on the Web, for example by flagging suspect spoofed sites in search engines, it is trickier to do this on the level of m-commerce, where mobile phones and SMS messaging are typically used for conducting transactions.

It is known from GB2387702 to provide a method of disguising PIN codes in m-commerce applications. GB2387702 recognises that traditional unencrypted PIN codes are vulnerable, especially if they are sent as SMS messages and thus stored in an SMS outbox. This problem is addressed by generating transient encryption table for each transaction, the encryption table showing a 1:1 mapping of the digits 0 to 9 to pseudorandomly selected (non-repeating) letters of the alphabet. In this way, a user need never enter his PIN directly into a device. As an alternative, the digits 0 to 9 may be mapped to other numbers, and page 6 describes the generation of a randomly ordered number pad to help address the problem of shoulder surfing. However, there is no disclosure of a method or system that allows a receiver of a message to verify its authenticity.

### BRIEF SUMMARY OF THE DISCLOSURE

In accordance with a first aspect, there is provided a method for a client device receiver of an electronic message to authenticate an identity of a server device sender of the electronic message, wherein the message contains a one-time security code in the form of a string of characters generated by selecting characters from a sender-side non-repeating pseudorandom string of characters by applying a user-specific PIN in the form of a first sequence of digits to the pseudorandom security string at the server device sender by sequentially selecting numerical positions in the sender-side pseudorandom string on the basis of the numbers in the user-specific PIN, taken in positional order, and returning the characters thereby selected from the sender-side pseudorandom string in sequence so as to form the one-time security code, and wherein upon receipt of the message, the client device receiver correlates the characters in the one-time security code with characters in a receiver-side non-repeating pseudorandom string of characters, identical to the sender-side pseudorandom string, by considering the characters of the one-time security code in sequence and identifying a numerical position of each character of the one-time security code in the receiver-side pseudorandom array to thereby generate second sequence of digits, and wherein the identity of the server device sender is authenticated by the client device receiver when the second sequence of digits matches the user-specific PIN.

In accordance with a second aspect, there is provided a system for a receiver of an electronic message to authenticate an identity of a sender of the electronic message, the system comprising a receiving client device and a transmitting server device that are operable to communicate electronically with each other; wherein the receiving client device includes a memory containing at least one receiver-side non-repeating pseudorandom string of characters and the transmitting server device includes a memory containing at least one transmitter-side non-repeating pseudorandom string of characters identical to the receiver-side pseudorandom string and a user-specific PIN in the form of a first sequence of digits; wherein the transmitting server device further includes a processor to generate a one-time security code in the form of a sequence or pattern of characters by applying the user-specific PIN so as to sequentially select numerical positions in the sender-side pseudorandom string on the basis of the numbers in the user-specific PIN, taken in positional order, and returning the characters thereby selected from the sender-side pseudorandom string in sequence so as to form the one-time security code; wherein the transmitting server device is configured to transmit an electronic message including the one-time security code to the receiving client device; and wherein the receiving client device is configured, upon receipt of the message, to correlate the characters in the one-time security code with characters in the receiver-side pseudorandom string by considering the characters of the one-time security code in sequence and identifying a numerical position of each character of the one-time security code in the receiver-side pseudorandom array to thereby generate second sequence of digits; and wherein the identity of the sender is authenticated by the receiving client device when the second sequence of digits matches the user-specific PIN.

The receiving client device may be a mobile electronic communication device, such as a mobile phone, smart phone, laptop computer, netbook, personal digital assistant or pager. The receiving client device does not have to be a mobile device, and could simply be a communications-enabled computer.

The transmitting server device may likewise be a mobile electronic communication device, or may be a non-mobile communications-enabled computer.

In an exemplary scenario, the receiving client device is a mobile phone or smart phone or the like, and the transmitting server device is part of a secure computer network at a financial or government institution, the method and system of the present invention being well-suited for to allow individuals to verify that electronic messages purportedly sent to them by their bank or a government body, are in fact authentic.

Where the receiving client device is a mobile telephone or the like, the electronic message may be transmitted in the form of a text message under the short messaging service (SMS) protocol. Other well-known communications protocols, including email, may be employed where appropriate, depending on the nature of the receiving client communications device.

An important feature is that the transmitter-side and receiver-side non-repeating pseudorandom strings must be the same for each verification transaction. It is also preferred that a different pseudorandom security string is used for each verification transaction. This can be achieved by way of the transmitting server device and the receiving client device each running identical secure pseudorandom string generating algorithms in synchronism with each other. This type of technology is known, for example, from remote control automobile locking systems. Alternatively, the memories of the receiving client device and the transmitting server device may each contain identical sets of pseudorandom strings, and may be configured to step through these strings for sequential verification transactions. The transmitting server device may also be configured to generate a new pseudorandom string after each verification transaction and then to transmit this new pseudorandom string to the receiving client device in a separate transmission (i.e. not together with the one-time security code, since this would compromise the integrity of the encryption). This may be done individually, or batches of pseudorandom strings may be transmitted periodically to the receiving client device, without any one-time security codes, so that the receiving client device has a supply of pseudorandom strings that can be used in a predetermined sequence with matching transmitter-side pseudorandom security strings.

In order to avoid redundancy errors, the pseudorandom security strings must be made up of non-repeating characters. Accordingly, where decimal numbers are used, the pseudorandom security string can be a maximum of 10 characters in length if there are to be no repeated numbers. This provides 10! = (10x9x8x7x6x5x4x3x2x1) = 3,628,800 different possible pseudorandom strings, which gives a reasonable level of security. Security can be improved by including additional symbols, such as letters and other characters, allowing the string to be lengthened without any repetition of characters in the string.

As a simple example, suppose that the transmitting server device and the receiving client device are each in possession of the pseudorandom security string 3659814702, and the user PIN is 4856. The user PIN is securely known to the transmitting server device (e.g. a bank computer) and also by the user him/herself. At the transmitting server device, the user PIN is applied to the pseudorandom security string by selecting the 4^{th}, 8^{th}, 5^{th} and 6^{th} characters, namely 9, 7, 8 and 1 to generate a one-time security code of 9781. A message sent from the transmitting server device to the receiving client device contains this one-time security code. At the receiving client device, the one-time security code is applied to the pseudorandom string already in the receiving client device memory by looking for the position in the pseudorandom string of the characters 9, 7, 8 and 1 to recreate the user PIN of 4856, thereby confirming the transaction. This process may be done manually where appropriate, or may be done automatically by a processor in the receiving client device.

It can be seen that the process works even when there is redundancy in the user PIN. For example, where the user PIN is 7887 in the above example, the one-time security code will be 4774, and applying this to the receiver-side pseudorandom string will regenerate the user PIN of 7887.

Where the pseudorandom strings include characters other than decimal numbers, for example 365gj78k2y, then a user PIN of 4856 will generate a one-time security code of gkj7, and applying this back to the receiver-side pseudorandom string will return the user PIN of 4856.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention is defined by the appended claims.

## Claims

1. A method for a client device receiver of an email or SMS message to authenticate an identity of a server device sender of the email or SMS message, thereby to hinder phishing attacks, wherein the message contains a one-time security code in the form of a string of characters generated by selecting characters from a sender-side non-repeating pseudorandom string of characters by applying a user-specific PIN in the form of a first sequence of digits to the pseudorandom security string at the server device sender by sequentially selecting numerical positions in the sender-side pseudorandom string on the basis of the numbers in the user-specific PIN, taken in positional order, and returning the characters thereby selected from the sender-side pseudorandom string in sequence so as to form the one-time security code, wherein upon receipt of the email or SMS message, the client device receiver correlates the characters in the one-time security code with characters in a receiver-side non-repeating pseudorandom string of characters, identical to the sender-side pseudorandom string, by considering the characters of the one-time security code in sequence and identifying a numerical position of each character of the one-time security code in the receiver-side pseudorandom array to thereby generate a second sequence of digits, and wherein the identity of the server device sender is authenticated by the client device receiver when the second sequence of digits matches the user-specific PIN.

2. A method according to claim 1, wherein the email or SMS message is received using a mobile electronic communication device or wherein the email or SMS message is received using a communications-enabled computer.

3. A method according to claim 1, wherein the email or SMS message is transmitted from a secure computer network and received by a mobile electronic communications device.

4. A method according to any preceding claim, wherein a different pseudorandom security string is used for each verification transaction.

5. A system for a receiver of an email or SMS message to authenticate an identity of a sender of the email or SMS message, thereby to hinder phishing attacks, the system comprising a receiving client device and a transmitting server device that are operable to communicate electronically with each other; wherein the receiving client device includes a memory containing at least one receiver-side non-repeating pseudorandom string of characters and the transmitting server device includes a memory containing at least one transmitter-side non-repeating pseudorandom string of characters identical to the receiver-side pseudorandom string and a user-specific PIN in the form of a first sequence of digits; wherein the transmitting server device further includes a processor to generate a one-time security code in the form of a sequence or pattern of characters by applying the user-specific PIN so as to sequentially select numerical positions in the sender-side pseudorandom string on the basis of the numbers in the user-specific PIN, taken in positional order, and returning the characters thereby selected from the sender-side pseudorandom string in sequence so as to form the one-time security code; wherein the transmitting server device is configured to transmit an email or SMS message including the one-time security code to the receiving client device; wherein the receiving client device is configured, upon receipt of the email or SMS message, to correlate the characters in the one-time security code with characters in the receiver-side pseudorandom string by considering the characters of the one-time security code in sequence and identifying a numerical position of each character of the one-time security code in the receiver-side pseudorandom array to thereby generate a second sequence of digits; and wherein the identity of the sender is authenticated by the receiving client device when the second sequence of digits matches the user-specific PIN.

6. A system as claimed in claim 5, wherein the receiving client device is a mobile electronic communication device or wherein the receiving client device is a communications-enabled computer.

7. A system as claimed in claim 5 or 6, wherein the receiving client device is a mobile phone or smart phone, and the transmitting server device is part of a secure computer network.

8. A system as claimed in any one of claims 5 to 7, wherein a different pseudorandom security string is used for each verification transaction.

9. A system as claimed in claim 8, wherein the transmitting server device and the receiving client device each run identical secure pseudorandom string generating algorithms in synchronism with each other.

10. A system as claimed in claim 8, wherein the transmitting server device and the receiving client device each have a memory, wherein the memories each contain identical sets of pseudorandom strings, and wherein the transmitting server device and receiving client device are configured to step through the strings in synchrony for sequential verification transactions.

11. A system as claimed in claim 8, wherein the transmitting server device is configured to generate a new pseudorandom string after each verification transaction, and then to transmit this new pseudorandom string to the receiving client device in a separate transmission.

12. A system as claimed in claim 8, wherein the transmitting server device is configured to generate batches of pseudorandom strings and to transmit these periodically to the receiving client device, without any one-time security codes, so that the receiving client device has a supply of pseudorandom strings that can be used in a predetermined sequence with matching transmitter-side pseudorandom security strings.

## Patentansprüche

1. Verfahren für einen Client-Gerät-Empfänger einer E-Mail- oder SMS-Nachricht, um die Identität eines Server-Gerät-Absenders der E-Mail- oder SMS-Nachricht zu authentifizieren, um dadurch Phishing-Angriffe zu verhindern, wobei die Nachricht einen einmaligen Sicherheitscode in der Form einer Zeichenkette enthält, die durch ein Auswählen von Zeichen von einer absenderseitigen, sich nicht wiederholenden pseudozufälligen Zeichenkette erzeugt wird, indem eine benutzerspezifische PIN in der Form einer ersten Ziffernfolge auf die pseudozufällige Sicherheitszeichenkette an dem Server-Gerät-Absender angewendet wird, indem numerische Stellen in der absenderseitigen pseudozufälligen Zeichenkette auf der Grundlage der Zahlen in der benutzerspezifischen PIN, die in der die Stelle betreffenden Reihenfolge genommen werden, aufeinanderfolgend ausgewählt werden, und die dadurch aus der absenderseitigen pseudozufälligen Zeichenkette ausgewählten Zeichen der Reihe nach zurückzugeben, um den einmaligen Sicherheitscode zu bilden, wobei beim Empfang der E-Mail- oder SMS-Nachricht der Client-Gerät-Empfänger die Zeichen in dem einmaligen Sicherheitscode mit Zeichen in einer empfängerseitigen, sich nicht wiederholenden pseudozufälligen Zeichenkette korreliert, die mit der absenderseitigen pseudozufälligen Zeichenkette identisch ist, indem die Zeichen des einmaligen Sicherheitscode der Reihe nach berücksichtigt werden und eine numerische Stelle jedes Zeichens des einmaligen Sicherheitscodes in der empfängerseitigen pseudozufälligen Anordnung identifiziert wird, um dadurch eine zweite Ziffernfolge zu erzeugen, und wobei die Identität des Absenders des Server-Geräts durch den Empfänger des Client-Geräts authentifiziert wird, wenn die zweite Ziffernfolge mit der benutzerspezifischen PIN übereinstimmt.

2. Verfahren nach Anspruch 1, wobei die E-Mail- oder SMS-Nachricht durch Verwenden eines mobilen elektronischen Kommunikationsgeräts empfangen wird oder wobei die E-Mail- oder SMS-Nachricht durch Verwenden eines kommunikationsfähigen Computers empfangen wird.

3. Verfahren nach Anspruch 1, wobei die E-Mail- oder SMS-Nachricht von einem sicheren Computernetzwerk übertragen und von einem mobilen elektronischen Kommunikationsgerät empfangen wird.

4. Verfahren nach einem vorhergehenden Anspruch, wobei für jede Verifikationstransaktion eine andere pseudozufällige Sicherheitszeichenkette verwendet wird.

5. System für einen Empfänger einer E-Mail- oder SMS-Nachricht, um eine Identität eines Absenders der E-Mail- oder SMS-Nachricht zu authentifizieren, um dadurch Phishing-Angriffe zu verhindern, wobei das System ein empfangendes Client-Gerät und ein übertragendes Server-Gerät umfasst, die betreibbar sind, um miteinander elektronisch zu kommunizieren; wobei das empfangende Client-Gerät einen Arbeitsspeicher aufweist, der mindestens eine empfängerseitige, sich nicht wiederholende pseudozufällige Zeichenkette enthält, und das übertragende Server-Gerät einen Arbeitsspeicher aufweist, der mindestens eine übertragungsseitige, sich nicht wiederholende pseudozufällige Zeichenkette, die mit der empfängerseitigen pseudozufälligen Zeichenkette identisch ist, und eine benutzerspezifische PIN in der Form einer ersten Ziffernfolge enthält; wobei das übertragende Server-Gerät ferner einen Prozessor aufweist, um einen einmaligen Sicherheitscode in der Form einer Reihenfolge oder eines Musters von Zeichen zu erzeugen, indem die benutzerspezifische PIN angewendet wird, um nacheinander numerische Stellen in der senderseitigen pseudozufällige Zeichenkette auf der Grundlage der Zahlen in der benutzerspezifischen PIN, die in der die Stelle betreffenden Reihenfolge genommen werden, auszuwählen, und die dadurch aus der senderseitigen pseudozufälligen Zeichenkette ausgewählten Zeichen nacheinander zurückzugeben, um den einmaligen Sicherheitscode zu bilden; wobei das übertragende Server-Gerät konfiguriert ist, um eine E-Mail- oder SMS-Nachricht einschließlich des einmaligen Sicherheitscodes an das empfangende Client-Gerät zu übertragen; wobei das empfangende Client-Gerät konfiguriert ist, beim Empfang der E-Mail- oder SMS-Nachricht die Zeichen in dem einmaligen Sicherheitscode mit Zeichen in der empfängerseitigen pseudozufälligen Zeichenkette zu korrelieren, indem die Zeichen des einmaligen Sicherheitscodes der Reihe nach berücksichtigt werden und eine numerische Stelle jedes Zeichens des einmaligen Sicherheitscodes in der empfängerseitigen pseudozufälligen Anordnung identifiziert wird, um dadurch eine zweite Ziffernfolge zu erzeugen; und wobei die Identität des Server-Gerät-Senders durch den Client-Gerät-Empfänger authentifiziert wird, wenn die zweite Ziffernfolge mit der benutzerspezifischen PIN übereinstimmt.

6. System nach Anspruch 5, wobei das empfangende Client-Gerät ein mobiles elektronisches Kommunikationsgerät ist oder wobei das empfangende Client-Gerät ein kommunikationsfähiger Computer ist.

7. System nach Anspruch 5 oder 6, wobei das empfangende Client-Gerät ein Mobiltelefon oder Smartphone ist und das übertragende Server-Gerät Teil eines sicheren Computernetzwerks ist.

8. System nach einem der Ansprüche 5 bis 7, wobei für jede Verifizierungstransaktion eine andere pseudozufällige Sicherheitszeichenkette verwendet wird.

9. System nach Anspruch 8, wobei das übertragende Server-Gerät und das empfangende Client-Gerät jeweils eine identische sichere pseudozufällige Zeichenkette ablaufen lassen, die miteinander synchrone Algorithmen erzeugen.

10. System nach Anspruch 8, wobei das übertragende Server-Gerät und das empfangende Client-Gerät jeweils einen Arbeitsspeicher haben, wobei die Arbeitsspeicher jeweils identische Sätze von pseudozufälligen Zeichenkette enthalten, und wobei das übertragende Server-Gerät und das empfangende Client-Gerät konfiguriert sind, um die Zeichenfolgen für aufeinanderfolgende Verifikationstransaktionen im Synchronismus zu durchlaufen.

11. System nach Anspruch 8, wobei das übertragende Server-Gerät konfiguriert ist, um nach jeder Verifikationstransaktion eine neue pseudozufällige Zeichenkette zu erzeugen und dann diese neue pseudozufällige Zeichenkette in einer separaten Übertragung an das empfangende Client-Gerät zu übertragen.

12. System nach Anspruch 8, wobei das übertragende Server-Gerät konfiguriert ist, um Stapel von pseudozufälligen Zeichenketten zu erzeugen und diese periodisch an das empfangende Client-Gerät ohne irgendwelche einmaligen Sicherheitscodes zu senden, damit das empfangende Client-Gerät einen Vorrat an pseudozufälligen Zeichenketten aufweist, die in einer vorbestimmten Reihenfolge mit passenden übertragungsseitigen pseudozufälligen Sicherheitszeichenketten verwendbar sind.

## Revendications

1. Procédé d'un dispositif client récepteur d'un message électronique ou SMS pour authentifier une identité d'un dispositif serveur émetteur du message électronique ou SMS, pour empêcher de la sorte des attaques d'hameçonnage, dans lequel le message contient un code de sécurité à usage unique sous la forme d'une chaîne de caractères générée en sélectionnant des caractères depuis une chaîne de caractères pseudo-aléatoire non-répétitive du côté émetteur en appliquant un code PIN spécifique à l'utilisateur sous la forme d'une première séquence de chiffres à la chaîne de sécurité pseudoaléatoire au niveau du dispositif serveur émetteur en sélectionnant de manière séquentielle des positions numériques dans la chaîne pseudoaléatoire du coté émetteur sur la base des nombres dans le code PIN spécifique à l'utilisateur, pris dans l'ordre positionnel, et en renvoyant les caractères ainsi sélectionnés depuis la chaîne pseudoaléatoire du côté émetteur en séquence de façon à former le code de sécurité à usage unique, dans lequel à la réception du message électronique ou SMS, le dispositif client récepteur met en corrélation les caractères dans le code de sécurité à usage unique avec des caractères dans une chaîne de caractères pseudo-aléatoire non-répétitive du côté récepteur, identique à la chaîne pseudo-aléatoire du côté émetteur, en tenant compte des caractères du code de sécurité à usage unique en séquence et en identifiant une position numérique de chaque caractère du code de sécurité à usage unique dans la matrice pseudo-aléatoire du côté récepteur pour générer de la sorte une deuxième séquence de chiffres, et dans lequel l'identité de l'émetteur du dispositif serveur est authentifiée par le dispositif client récepteur quand la deuxième séquence de chiffres correspond au code PIN spécifique à l'utilisateur.

2. Procédé selon la revendication 1, dans lequel le message électronique ou SMS est reçu en utilisant un dispositif de communication électronique mobile ou dans lequel le message électronique ou SMS est reçu en utilisant un ordinateur à fonction de télécommunications.

3. Procédé selon la revendication 1, dans lequel le message électronique ou SMS est transmis depuis un réseau informatique sécurisé et reçu par un dispositif de communication électronique mobile.

4. Procédé selon l'une quelconque revendication précédente, dans lequel une chaîne de sécurité pseudo-aléatoire différente est utilisée pour chaque transaction de vérification.

5. Système pour un receveur d'un message électronique ou SMS pour authentifier une identité d'un émetteur du message électronique ou SMS, pour empêcher de la sorte des attaques d'hameçonnage, le système comprenant un dispositif client en réception et un dispositif serveur en transmission qui sont utilisables pour communiquer par voie électronique l'un avec l'autre ; dans lequel le dispositif client en réception inclut une mémoire contenant au moins une chaîne de caractères pseudo-aléatoire non-répétitive du côté récepteur et le dispositif serveur en transmission inclut une mémoire contenant au moins une chaîne de caractères pseudo-aléatoire non-répétitive du côté transmetteur identique à la chaîne pseudo-aléatoire du côté récepteur et un code PIN spécifique à l'utilisateur sous la forme d'une première séquence de chiffres ; dans lequel le dispositif serveur en transmission inclut en outre un processeur pour générer un code de sécurité à usage unique sous la forme d'une séquence ou un modèle de caractères en appliquant le code PIN spécifique à l'utilisateur de façon à sélectionner de manière séquentielle des positions numériques dans la chaîne pseudo-aléatoire du côté émetteur sur la base des nombres dans le code PIN spécifique à l'utilisateur, pris dans l'ordre positionnel, et en renvoyant les caractères ainsi sélectionnés depuis la chaîne pseudo-aléatoire du côté émetteur en séquence de façon à former le code de sécurité à usage unique ; dans lequel le dispositif serveur en transmission est configuré pour transmettre un message électronique ou SMS incluant le code de sécurité à usage unique au dispositif client en réception ; dans lequel le dispositif client en réception est configuré, à la réception du message électronique ou SMS, pour mettre en corrélation les caractères dans le code de sécurité à usage unique avec des caractères dans la chaîne pseudo-aléatoire du côté récepteur, en tenant compte des caractères dans le code de sécurité à usage unique en séquence et en identifiant une position numérique de chaque caractère du code de sécurité à usage unique dans la matrice pseudo-aléatoire du côté récepteur pour générer de la sorte une deuxième séquence de chiffres ; et dans lequel l'identité de l'émetteur est authentifiée par le dispositif client en réception quand la deuxième séquence de chiffres correspond au code PIN spécifique à l'utilisateur.

6. Système selon la revendication 5, dans lequel le dispositif client en réception est un dispositif de communication électronique mobile ou dans lequel le dispositif client en réception est un ordinateur à fonction de télécommunications.

7. Système selon la revendication 5 ou 6, dans lequel le dispositif client en réception est un téléphone portable ou un smartphone, et le dispositif serveur en transmission fait partie d'un réseau informatique sécurisé.

8. Système selon l'une quelconque des revendications 5 à 7, dans lequel une chaîne de sécurité pseudo-aléatoire différente est utilisée pour chaque transaction de vérification.

9. Système selon la revendication 8, dans lequel le dispositif serveur en transmission et le dispositif client en réception exécutent chacun une chaîne pseudo-aléatoire sécurisée identique générant des algorithmes en synchronisation l'un avec l'autre.

10. Système selon la revendication 8, dans lequel le dispositif serveur en transmission et le dispositif client en réception ont chacun une mémoire, dans lequel les mémoires contiennent chacune des ensembles identiques de chaînes pseudo-aléatoires, et dans lequel le dispositif serveur en transmission et le dispositif client en réception sont configurés pour progresser dans les chaînes en synchronisation pour des transactions de vérification séquentielle.

11. Système selon la revendication 8, dans lequel le dispositif serveur en transmission est configuré pour générer une nouvelle chaîne pseudo-aléatoire après chaque transaction de vérification, et ensuite pour transmettre cette nouvelle chaîne pseudo-aléatoire au dispositif client en réception dans une transmission séparée.

12. Système selon la revendication 8, dans lequel le dispositif serveur en transmission est configuré pour générer des lots de chaînes pseudo-aléatoires et pour transmettre ceux-ci de manière périodique au dispositif client en réception, sans aucun code de sécurité à usage unique, de façon à ce que le dispositif client en réception soit alimenté en chaînes pseudo-aléatoires qui peuvent être utilisées dans une séquence prédéterminée avec des chaînes de sécurité pseudo-aléatoires du côté transmetteur correspondantes.
